(19) Europäisches Patentamt
European Patent Office
Office européen des brevets

(11) **EP 4 130 733 B1**

(12) **EUROPEAN PATENT SPECIFICATION**

(45) Date of publication and mention
of the grant of the patent:
**10.12.2025 Bulletin 2025/50**

(21) Application number: **21776988.4**

(22) Date of filing: **26.03.2021**

(51) International Patent Classification (IPC):
***G01N 30/60*** (2006.01)

(52) Cooperative Patent Classification (CPC):
**G01N 30/603; B01D 15/22; G01N 30/606;**
G01N 30/50

(86) International application number:
**PCT/JP2021/012835**

(87) International publication number:
**WO 2021/193912 (30.09.2021 Gazette 2021/39)**

(54) **LIQUID CHROMATOGRAPHY COMPONENT**

KOMPONENTE FÜR FLÜSSIGKEITSCHROMATOGRAFIE

ÉLÉMENT DE CHROMATOGRAPHIE EN PHASE LIQUIDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.03.2020 JP 2020058423**

(43) Date of publication of application:
**08.02.2023 Bulletin 2023/06**

(73) Proprietor: **Sekisui Medical Co., Ltd.**
**Tokyo 103-0027 (JP)**

(72) Inventors:
• **NEMOTO, Yuriko**
**Tokyo 103-0027 (JP)**
• **UMETSU, Mina**
**Tokyo 103-0027 (JP)**
• **TAIRA, Hiroaki**
**Tokyo 103-0027 (JP)**

(74) Representative: **Wächtershäuser & Hartz Patentanwaltspartnerschaft mbB**
**Weinstraße 8**
**80333 München (DE)**

(56) References cited:
CN-A- 102 803 958    JP-A- 2005 538 376
JP-A- 2019 032 346    JP-A- H0 663 130
JP-A- H10 501 335    US-A- 4 475 821
US-B2- 7 143 900

**Description**

Field of the Invention

The present invention relates to a liquid chromatography component.

Background of the Invention

Liquid chromatography is widely used for analyzing components in samples in the fields of organic chemistry, biochemistry, and medicine, and other fields. For example, in the field of medicine, liquid chromatography is used for analyzing hemoglobin A1c, which is an indicator of diabetes diagnosis. Hemoglobin A1c is a glycated hemoglobin in which blood sugar is bound to hemoglobin. The blood hemoglobin A1c level (%), or the percentage of hemoglobin A1c in the total blood hemoglobin, reflects the average blood glucose level over the latest one to two months and is widely used as an indicator of diabetes diagnosis.

A liquid flowing through a liquid chromatography system may contain foreign substances from samples, reaction reagents, the mobile phase, or part of the system. These foreign substances may adversely affect analysis because they are adsorbed on the surfaces of packing material particles packed in the analytical column of the system or adsorbed on the cell of the detector. The adverse effect of foreign substances tends to become a problem particularly in continuous analysis of many samples or in analysis of samples containing many foreign substances, such as blood samples.

To prevent this problem, a filter for filtering foreign substances may be disposed in a flow path from the sample injection port to the analytical column of the liquid chromatography system. Such a filter is disposed to prevent variations in liquid flow pressure caused by clogging of the flow path, particularly the column, with foreign substances. In particular, a prefilter disposed upstream of the column is important for preventing the column from being clogged with foreign substances. However, increasing the filtration efficiency of the filter to more efficiently capture foreign substances tend to cause the filter to be clogged with foreign substances and may result in variations in liquid flow pressure. Variations in liquid flow pressure may adversely affect analysis of samples.

Examples of common methods for suppressing an increase in liquid flow pressure caused by clogging of a filter include a method involving increasing the filtration area of the filter, a method involving increasing the porosity of the filter, and a method involving improving the configuration of the filter, for example, by using multiple filters. For example, Patent Literature 1 discloses a liquid chromatography component having a stack of multiple filters having different pore sizes upstream of a column. Patent Literature 2 discloses a liquid chromatography component including a prefilter and a column packed with packing material particles. The packing material particles have an average particle size of 2 to 20 $\mu$m, and the prefilter has a filtration particle size of 1/6 to 1/3 of the average particle size of the packing material particles and has an effective filtration area of 7 to 80 mm$^2$.

A liquid chromatography component comprising an analytical column packed with a packing material and a first filter disposed upstream of the packing material in a space is disclosed in US-A-4475821.

Citation List

Patent Literature

Patent Literature 1: JP-A-H02-262054
Patent Literature 2: WO 2009/123199

Summary of the Invention

Technical Problem

The present invention provides a liquid chromatography component that suppresses an increase in liquid flow pressure caused by repeated use for sample analysis and has high durability.

Solution to Problem

The inventors of the present invention found that a liquid chromatography component that has a filter upstream of the packing material of the analytical column and in which the space upstream of the filter has a volume controlled in a suitable range can suppress an increase in liquid flow pressure caused by repeated use.

Advantageous Effects of the Invention

Since an increase in liquid flow pressure caused by repeated use for sample analysis is unlikely to occur in the liquid chromatography component according to the present invention, the liquid chromatography component has high durability and a long life. Therefore, the present invention can reduce the time and cost for column replacement in liquid chromatography analysis of samples.

Brief Description of Drawings

Fig. 1 is a schematic view of the structure of a liquid chromatography component.
Fig. 2 illustrates the time course of changes in liquid flow pressure in the liquid chromatography component.

Detailed Description of the Invention

In the related art, analytical columns used for liquid chromatography analysis of hemoglobin A1c are usually replaced every time after analysis of 1500 to 3000 samples. Patent Literature 2 discloses a liquid chromatography component that hardly causes variations in liquid flow pressure even after 3000 times of continuous use. However, there is a need to further improve the durability of columns and/or prefilters in liquid chromatography components in order to improve the analysis efficiency and reduce the time and cost for replacement of columns and filters.

The present invention suppresses an increase in liquid flow pressure caused by repeated use in a liquid chromatography component to improve the durability of the liquid chromatography component. The present invention provides a liquid chromatography component having improved durability. The liquid chromatography component of the present invention may be used as a sample separator of a liquid chromatography system.

The liquid chromatography component of the present invention includes an analytical column packed with a packing material, a liquid flow inlet, and a filter disposed upstream of the packing material and also downstream of the liquid flow inlet. The liquid chromatography component of the present invention includes two filters (e.g., a first filter and a second filter) upstream of the packing material and downstream of the liquid flow inlet. The first filter is located upstream of the second filter. In this description, the terms upstream and downstream used for the liquid chromatography component are based on the liquid flow direction in the component. In other words, the nearer to the liquid flow inlet in the component it is, the more upstream it is located. The nearer to the liquid flow outlet it is, the more downstream it is located. Therefore, a liquid injected into the liquid chromatography component of the present invention passes through the liquid flow inlet, the first filter (next the second filter when present), and then the packing material in the analytical column, and thereafter flows out of the component.

The inner diameter of the analytical column is preferably 2.0 mm or more, more preferably 3.0 mm or more, and preferably 6.0 mm or less, more preferably 5.5 mm or less, even more preferably 5.0 mm or less. If the inner diameter of the column is too small, the linear velocity of the mobile phase flowing in the column may become too high, and the liquid flow pressure may become too high. If the inner diameter of the column is too large, the sample and the mobile phase may be diffused in the column to degrade the separation performance. The inner diameter of the column is preferably in the range of 2.0 to 6.0 mm, more preferably 3.0 to 5.5 mm, even more preferably 3.0 to 5.0 mm.

The length of the analytical column is preferably 10 mm or more, more preferably 15 mm or more, and preferably 150 mm or less, more preferably 50 mm or less, even more preferably 40 mm or less. If the length of the column is too small, the separation performance of the liquid chromatography component may decrease with decreasing number of theoretical plates. If the length of the column is too large, it may take time to elute analytes and thus take a long time to measure, or the liquid flow pressure may increase. The length of the column is preferably in the range of 10 to 150 mm, more preferably 10 mm to 50 mm, even more preferably 10 mm to 40 mm, much more preferably 15 to 40 mm.

The packing material in the analytical column is preferably in the form of particles. The average particle size of the packing material particles is preferably 2 $\mu$m or more, more preferably 6 $\mu$m or more, and preferably 20 $\mu$m or less, more preferably 12 $\mu$m or less. If the average particle size of the packing material particles is too small, the liquid flow pressure in the column may become too high to increase the load on the liquid chromatography component or reduce the accuracy or efficiency of chromatography analysis. If the average particle size of the packing material particles is too large, the separation performance of the liquid chromatography component decreases. The average particle size of the packing material particles is preferably in the range of 2 to 20 $\mu$m, more preferably 6 to 12 $\mu$m. In this description, the average particle size of the particles refers to the average particle size measured with a laser diffraction particle size distribution analyzer (e.g., "AccuSizer780"; Particle Sizing Systems).

In the liquid chromatography component of the present invention, the first and second filters are filters disposed upstream of the packing material of the analytical column. Preferably, the first and second filters are filters for capturing foreign substances in the liquid flow and may prevent foreign substances from entering into the packing material.

The first filter preferably has a filtration particle size of 1/6 to 1/3 of the average particle size of the packing material particles described above. With this configuration, the foreign substances passing through the first filter without being captured by the first filter may pass through the column through gaps in the packing material. This may prevent the column from being clogged with the foreign substances. If the filtration particle size of the first filter is less than 1/6 of the average particle size of the packing material particles, the filter is easily clogged. If the filtration particle size of the first filter is more than 1/3 of the average particle size of the packing material particles, the column is easily clogged with foreign substances. More preferably, the filtration particle size of the first filter is 1/5 to 1/3 of the average particle size of the packing material particles.

In this description, the filtration particle size of a filter is defined as the average particle size of standard particles that show a capture rate of 95% on the filter when filtered through the filter. The capture rate of standard particles on the filter is calculated by the following procedure.

- The filter is connected to the liquid chromatography system, and pure water is fed as a mobile phase. The standard particles are introduced at a common feed rate, **e.g.,** 1.7 mL/min, and the peak area (1) of the obtained chromatogram is calculated. The peak area (1) reflects the amount of standard particles passing through the filter without being captured by the filter.
- Next, the filter is replaced with a tube, the same standard particle sample is introduced, and the peak area (2) of the obtained chromatogram is calculated. The peak area (2) reflects the amount of introduced standard particles.
- The capture rate (%) of standard particles is calculated based on the following formula from the peak area (1) and the peak area (2).

The capture rate (%) = 100 - (peak area (1)/peak area (2)) $\times$ 100

As the standard particles, commercial standard particles (e.g., polystyrene standard particles available from MORITEX Corporation) can be used.

The effective filtration area of the first filter is preferably 5 mm$^2$ or more, more preferably 15 mm$^2$ or more, even more preferably 20 mm$^2$ or more, and preferably 60 mm$^2$ or less, more preferably 55 mm$^2$ or less, even more preferably 30 mm$^2$ or less. If the effective filtration area of the filter is too small, the filter is easily clogged. If the effective filtration area of the filter is too large, the separation performance of the liquid chromatography component decreases. The effective filtration area of the first filter is preferably in the range of 5 to 60 mm$^2$, more preferably 15 to 55 mm$^2$, even more preferably 20 to 30 mm$^2$.

The porosity of the first filter is preferably 60% or more, more preferably 65% or more, and preferably 90% or less, more preferably 80% or less. If the porosity is too low, the filter is easily clogged. If the porosity of the filter is too high, a desired filtration particle size may not be obtained. The porosity of the first filter is preferably in the range of 60% to 90%, more preferably 65% to 80%.

The filtration particle size, the effective filtration area, and the porosity of the second filter may be the same as or different from those of the first filter. Suitable ranges of the filtration particle size, the effective filtration area, and the porosity of the second filter are the same as those of the first filter. For example, the filtration particle size of the second filter is preferably 1/6 to 1/3, more preferably 1/5 to 1/3 of the average particle size of the packing material particles. The effective filtration area of the second filter is preferably in the range of 5 to 60 mm$^2$, more preferably 15 to 55 mm$^2$, even more preferably 20 to 30 mm$^2$. The porosity of the second filter is preferably in the range of 60% to 90%, more preferably 65% to 80%.

The liquid chromatography component includes a space upstream of the first filter, that is, between the first filter and the liquid flow inlet. The volume of the space (hereinafter referred to as a first space) between the first filter and the liquid flow inlet in the liquid chromatography component is preferably 7 mm$^3$ or more, more preferably 10 mm$^3$ or more, and preferably 50 mm$^3$ or less, more preferably 30 mm$^3$ or less. The distance from the first filter to the liquid flow inlet (the shortest distance between the filtration surface of the first filter and the downstream end of the liquid flow inlet, hereinafter referred to as a first space length) is preferably 0.6 mm or more, more preferably 0.7 mm or more, and preferably 2.0 mm or less, more preferably 1.5 mm or less. If the first space is too small or the first space length is too short, the liquid flow pressure may become too high to increase the load on the liquid chromatography component or reduce the accuracy or efficiency of chromatography analysis. If the first space is too large or the first space length is too long, the separation performance of the analytical column decreases. The volume of the first space is in the range of 7 to 5C mm$^3$, more preferably 10 to 30 mm$^3$. The first space length is in the range of 0.6 to 2.0 mm, more preferably 0.7 to 1.5 mm. The first space volume and the first space length can be adjusted by, for example, controlling the position of the first filter by disposing, for example, a spacer between the liquid flow inlet and the first filter. Preferably, the first space may have a tubular shape with a certain width (e.g., a cylindrical shape with a certain inner diameter) but preferably has a tapered hole shape that gradually tapers toward the liquid flow inlet. Alternatively, the first space may have a combination of the cylindrical shape and the tapered hole shape.

In the liquid chromatography component, the liquid flow inlet may be an opening located at the upstream end of the first space and being narrower than the first space. When the first space is tapered, the liquid flow inlet may be located at the narrowest part of the taper end. When the liquid chromatography component has an injection channel for liquid injection from outside, the liquid flow inlet may be the downstream end of the injection channel. The liquid flow inlet may have any shape, but preferably has a circular shape. The liquid flow inlet has any size. However, the liquid flow inlet with an excessively large size degrades the separation performance of the analytical column, and the liquid flow inlet with an excessively small size increases the liquid flow pressure. The liquid flow inlet preferably has a maximum width (or inner diameter) of 0.1 to 2.0 mm, more preferably 0.3 to 1.0 mm.

The volume of the space (hereinafter referred to as a second space) between the first filter and the second filter in the liquid chromatography component is preferably 1 mm$^3$ or more, more preferably 6 mm$^3$ or more, and preferably 50 mm$^3$ or less, more preferably 25 mm$^3$ or less. The distance between the first filter and the second filter (the shortest distance between the filtration surfaces of two filters, hereinafter referred to as a second space length) is preferably 0.1 mm or more, more preferably 0.3 mm or more, and preferably 1.5 mm or less, more preferably 1.0 mm or less. If the second space is too small or the second space length is too short, there is high possibility that the liquid flow pressure becomes too high to increase the load on the liquid chromatography component or reduce the accuracy or efficiency of chromatography analysis. If the second space is too large or the second space length is too long, the separation performance of the analytical column decreases. The volume of the second space is in the range of 1 to 5C mm$^3$, more preferably 6 to 25 mm$^3$. The second space length is in the range of 0.1 to 1.5 mm, more preferably 0.3 to 1.0 mm. The second space volume and the second space length can be adjusted by, for example, controlling the distance between the first and second filters with, for example, a spacer. Preferably, the second space has a tubular shape with a certain width, preferably has a tubular shape with a certain inner diameter.

In the liquid chromatography component, filters for preventing leakage of the packing material particles from the column are preferably disposed upstream and downstream of the packing material of the analytical column. Preferably, the particle leakage preventing filters are disposed in direct contact with the packing material or disposed in contact with the packing material with, for example, a spacer or a seal member therebetween. When the particle leakage preventing filter is disposed upstream of the packing material, the particle leakage preventing filter may be used as the first or second filter.

The first filter, the second filter, and the particle leakage preventing filters may be formed of, for example, a known filter material used for filters for liquid chromatography. Examples of the filter material include metals, such as aluminum, copper, titanium, nickel, iron, chromium, and tin; alloys, such as stainless steel; resins, such as Nylon resins, fluororesins, cellulose resins, sulfone resins, ether sulfone resins, olefin resins, acrylic resins, ester resins, vinylon resins, carbonate resins, urethane resins, styrene resins, vinyl chloride resins, ether ether ketone resins, epoxy resins, phenol resins, and Noryl resins; ceramics, such as zirconia; and glasses, such as borosilicate glass and quartz glass. Examples of suitable filters include a stainless steel filter including three layers having different pore sizes described in JP-A-2006-189427. The filtration surfaces of these filters may have a circular shape or other shapes. The filtration surfaces of these filters are preferably planer surfaces.

The thickness of the first filter, the second filter, and the particle leakage preventing filters described above is preferably 0.1 mm or more, more preferably 0.2 mm or more, and preferably 10 mm or less, more preferably 3 mm or less. If the filters are too thin, the filters are easily clogged. If the filters are too thick, the separation performance of the analytical column may decrease. The thickness of the filters is preferably in the range of 0.1 to 10 mm, more preferably 0.2 to 3 mm.

Examples of the material of the spacer that may be disposed between the liquid flow inlet and the first filter or between the first filter and the second filter include the same materials as the filter materials described above. For example, stainless steel (SUS), fluororesins, such as PTFE (polytetrafluoroethylene), and polyether ether ketone (PEEK) are preferred, and PEEK is more preferred. The material of the spacer is not limited to these examples, and a given material can be freely selected by those skilled in the art. The spacer material preferably has high compressive strength (proof stress) to withstand the pressure of liquid flow. More preferably, the proof stress of the spacer material is greater than or equal to that of PTFE, more preferably greater than or equal to that of PEEK. The proof stress of stainless steel (SUS) varies depending on the composition, surface finishing, or other factors. For example, the proof stress of SUS316 available from Toyo Success Co., Ltd. is 205 MPa. In general, the proof stress of PTFE is 10 to 15 MPa, and the proof stress of PEEK is around 125 MPa. The spacer preferably has a hollow shape, such as O-ring. The size of the spacer can be appropriately changed according to the sizes of the filters and desired sizes of the first and second spaces.

The liquid chromatography component may further include, upstream of the first filter or between the first filter and the second filter, a component (distributer) for distributing liquid flow, as desired. The distributer may be, for example, a plate having many pores, or a mesh. The distributer can distribute liquid flow to make uniform the liquid flow pressure on the filtration surface of the first filter or the second filter. The distributer does not need to have a function of capturing foreign substances in the liquid flow.

In the liquid chromatography component of the present invention, the packing material, the liquid flow inlet, the filters, the distributer, and other members described above may be stored in the container body of the component. Alternatively, the container body itself may be configured as a column for holding the packing material. For example, the container body is a cylindrical container having openings serving as the liquid flow inlet and outlet. The container body can store, for example, the packing material and, as desired, filters, such as the first filter, the second filter, the particle leakage preventing filters, and the distributer. The container body may be composed of one or more parts. For example, the container body may be one container that stores the packing material and the filters, may be a combination of a part that stores the packing material and a part that stores the first filter and, as desired, the second filter, or may be a combination of a part that stores the first filter and a part that stores the packing material and the second filter. Examples of the material of the container body include metals, such as stainless steel and titanium; resins, such as fluororesins and PEEK; and glasses.

The filters, the distributer, the liquid flow inlet and outlet, the analytical column, and the interior of the container body are preferably surface-treated to prevent non-specific adsorption of, for example, analytes. In the surface treatment, the surfaces are modified by a chemical treatment and/or a physical treatment to prevent non-specific adsorption on the surfaces. Examples of the chemical treatment and/or the physical treatment include modification of the surfaces by heating or by an oxidation reaction with an acid, and a blocking treatment by coating with a hydrophilic substance or a hydrophobic substance. Examples of the substance used in the blocking treatment include proteins, such as bovine serum albumin, globulin, lactoferrin, and skim milk; silicone; and fluororesins.

The above configuration suppresses an increase in liquid flow pressure caused by repeated use and thus improves the durability of the liquid chromatography component of the present invention. Therefore, the liquid chromatography component enables analysis of more samples and can reduce the time and cost for column replacement in liquid chromatography analysis of samples.

The present invention also provides a liquid chromatography analyzer including the liquid chromatography component according to the present invention described above. For example, the liquid chromatography system includes a detector and a sample separator including the liquid chromatography component of the present invention and may further include, as desired, a pump for feeding liquids, such as sample liquids, reagent liquids, the mobile phase, a controller for controlling liquid feed or detection conditions and acquiring detection results, and other members. A sample liquid to be analyzed is injected into the flow path of the system and delivered to the sample separator. The detector detects components in the liquid that has passed through the sample separator and outputs a chromatogram based on the detection results.

Examples

Aspects of the present invention will be more specifically described below by way of Examples, but the present invention is not limited only to these Examples.

Production Example: Production of Liquid Chromatography Component

(1) Preparation of Filter

A stainless steel fiber-sintered filter sheet having a thickness of 0.4 mm and a porosity of 70% was punched out into a circle having a diameter of 6.5 mm to provide a stainless steel fiber-sintered filter. The stainless steel fiber-sintered filter sheet had a three-layer structure in which a filter layer (outer layer 1) having a pore size of 12 $\mu$m and a thickness of 0.1 mm, a filter layer (inner layer) having a pore size of 3 $\mu$m and a thickness of 0.2 mm, and a filter layer (outer layer 2) having a pore size of 12 $\mu$m and a thickness of 0.1 mm were stacked in this order. The obtained stainless steel fiber-sintered filter was subjected to a blocking treatment with bovine serum albumin in order to prevent non-specific adsorption of hemoglobins. The surface-treated filter was sandwiched between polytetrafluoroethylene packings and placed in a polyether ether ketone holder having a screw connectable to a flow path to provide a filter.

(2) Preparation of Packing Material Particles To a 3% aqueous solution of polyvinyl alcohol (available from Nippon Synthetic Chemical Industry Co., Ltd.) was added a mixture of 300 g of tetraethylene glycol dimethacrylate (available from Shin-Nakamura Chemical Co., Ltd.), 100 g of triethylene glycol dimethacrylate (available from Shin-Nakamura Chemical Co., Ltd.), and 1.0 g of benzoyl peroxide (available from Kishida Chemical Co., Ltd.). The resulting mixture was subjected to polymerization at 80°C for one hour under stirring in a reactor in a nitrogen atmosphere. Next, as monomers having ion exchange groups, 100 g of 2-methacrylamido-2-methylpropane sulfonic acid (available from Toagosei Co., Ltd.) and 100 g of polyethylene glycol methacrylate (available from NOF Corporation, ethylene glycol chain n = 4) were dissolved in ion exchange water. This mixture was further added to the reactor after one hour polymerization and subjected to polymerization at 80°C for two hours under stirring in a nitrogen atmosphere. The obtained polymer composition was washed with water and acetone to provide particles having an ion exchange group. The obtained particles (10 g) were immersed in 300 mL of ozone water having a dissolved ozone gas concentration of 100 ppm and stirred for 30 minutes. After completion of the stirring, the mixture was centrifuged with a centrifuge (Himac CR20G available from Hitachi, Ltd.), and the supernatant was removed. This process was repeated twice to provide packing material particles. The obtained packing material particles were analyzed with a laser diffraction particle size distribution analyzer ("AccuSizer780"; Particle Sizing Systems) and found to have an average particle size of 10 $\mu$m and a CV value of 14%.

(3) Production of Liquid Chromatography Component

Comparative Example 1, Production Example 1)

The packing material particles prepared in (2) were packed in a cylindrical container (4.6 mm in inner diameter, 20 cm in length) to provide a column. A PTFE seal member having a thickness of 0.7 mm and a doughnut shape and the filter having a diameter of 6.5 mm prepared in (1) were disposed upstream and downstream of the packing material of the column such that the PTFE seal member and the filter were arranged from the packing material side of the column. A distributer formed of a stainless steel plate having a groove-like hole and a thickness of 0.2 mm was further disposed upstream of the upstream filter. A column end (having counterbored taper inside and, at its end portion, a liquid flow inlet with an inner diameter of 0.5 mm) was attached to the constructed column from upstream to produce a liquid chromatography component. The depth of counterboring inside the column end was 0.3 mm in Comparative Example 1 and 0.5 mm in Production Example 1.

Production Example 2)

The same procedure as in Production Example 1 was conducted except that the filter (first filter) having a diameter of 6.5 mm prepared in (1) was further disposed upstream of the filter (second filter) and the distributer disposed upstream of the packing material. A column end (having 0.5-mm-counterbored taper inside and, at its end portion, a liquid flow inlet with an inner diameter of 0.5 mm) was attached to the constructed column from upstream to produce a liquid chromatography component.

Production Examples 3 to 4)

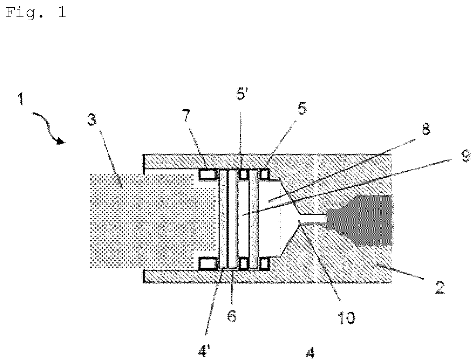

The same procedure as in Production Example 1 was conducted except that a second spacer, the filter (first filter) having a diameter of 6.5 mm prepared in (1), and a first spacer were further disposed in this order upstream of the filter (second filter) and the distributer disposed upstream of the packing material. As the first and second spacers, o-rings (inner diameter 5.5 mm) formed of Teflon (registered trademark) or PEEK were used. A column end (having 0.5-mm-counterbored taper inside and, at its end portion, a liquid flow inlet with an inner diameter of 0.5 mm) was attached to the constructed column from upstream to produce a liquid chromatography component. Fig. 1 is a schematic view of the structure of the produced liquid chromatography component.

Table 1 shows the specifications of the produced liquid chromatography components. The length and volume of the space (first space) from the first filter to the liquid flow inlet of the column and the length and volume of the space (second space) between the first filter and the second filter in the chromatography components are values excluding the space occupied by the distributer.

[Table 1]

|  | Comparative Example 1 | Production Example 1 | Production Example 2 | Production Example 3 | Production Example 4 |
|---|---|---|---|---|---|
| Filter | | | | | |
| first filter | + | + | + | + | + |
| second filter | - | - | + | + | + |
| First space | | | | | |
| length (mm) between first filter and liquid flow inlet | 0.5 | 0.7 | 0.7 | 1.4 | 1.4 |
| space volume (mm$^3$) | 6.09 | 9.41 | 9.41 | 26.04 | 26.04 |
| Second space | | | | | |
| length (mm) between first and second filters | - | - | 0.0 | 0.8 | 0.3 |
| space volume (mm$^3$) | - | - | 0.00 | 19.00 | 7.12 |

(continued)

| | Comparative Example 1 | Production Example 1 | Production Example 2 | Production Example 3 | Production Example 4 |
|---|---|---|---|---|---|
| Filters (first, second) material | SUS | SUS | SUS | SUS | SUS |
| thickness (mm) | 0.4 | 0.4 | 0.4 | 0.4 | 0.4 |
| porosity (%) | 70 | 70 | 70 | 70 | 70 |
| filtration particle size ($\mu$m) | 3 | 3 | 3 | 3 | 3 |
| effective filtration area (first filter) (mm$^2$) | 5.92 | 5.92 | 16.61 | 23.75 | 23.75 |
| effective filtration area (second filter) (mm$^2$) | - | - | 5.92 | 5.92 | 5.92 |
| First spacer whether first spacer is inserted | - | - | - | + | + |
| material | - | - | - | Teflon (R) | Teflon (R) |
| inner diameter (mm) | - | - | - | 5.5 | 5.5 |
| thickness (mm) | - | - | - | 0.7 | 0.7 |
| Second spacer whether second spacer is inserted | - | - | - | + | + |
| material | - | - | - | PEEK | PEEK |
| inner diameter (mm) | - | - | - | 5.5 | 5.5 |
| thickness (mm) | - | - | - | 0.8 | 0.3 |
| Column average particle size ($\mu$m) of packing material particles | 10 | 10 | 10 | 10 | 10 |
| column inner diameter (mm) | 4.6 | 4.6 | 4.6 | 4.6 | 4. 6 |
| column length (mm) | 20 | 20 | 20 | 20 | 20 |

Test 1

(1) Evaluation of Liquid Flow Pressure

The liquid chromatography component of any one of Examples and Comparative Example was connected to the following systems to construct a liquid chromatography analyzer.

Liquid feeding pump: LC-20AD (available from Shimadzu Corporation)
Auto sampler: SIL-20AC (available from Shimadzu Corporation)
Sample separator (column): Production Examples 1 to 4 or Comparative Example 1
Detector: SPD-M20A (available from Shimadzu Corporation)
Column oven: CTO-20AC (available from Shimadzu Corporation)

By using this liquid chromatography analyzer, the hemoglobin A1c levels of up to 7000 samples were continuously measured under the following analytical conditions.

Eluent:

First liquid: 50 mmol/L phosphate buffer (pH 5.3)
Second liquid: 250 mmol/L phosphate buffer (pH 8.0) containing 0.05 wt% polyoxyethylene (20) sorbitan monolaurate (available from Wako Pure Chemical Industries, Ltd.)
Measurement time: 60 sec
Flow rate: 1.7 mL/min
Column temperature: 40°C

Detection wavelength: 415 nm
Sample injection volume: 5 μL

In chromatography analysis, the liquid flow pressure was measured once every several hundreds of times of analysis during continuous analysis of loading samples. In pressure measurement, the liquid flow pressure on the column was measured when the eluent first liquid was fed after a test sample was passed through the column. The loading samples were prepared by a 101-fold dilution of healthy human whole blood with a hemolyzing solution (a phosphate buffer (pH 7.0) containing 0.1 wt% of polyoxyethylene (10) octylphenyl ether (available from Wako Pure Chemical Industries, Ltd). As the test sample, a commercial control for measurement of HbA1c was used.

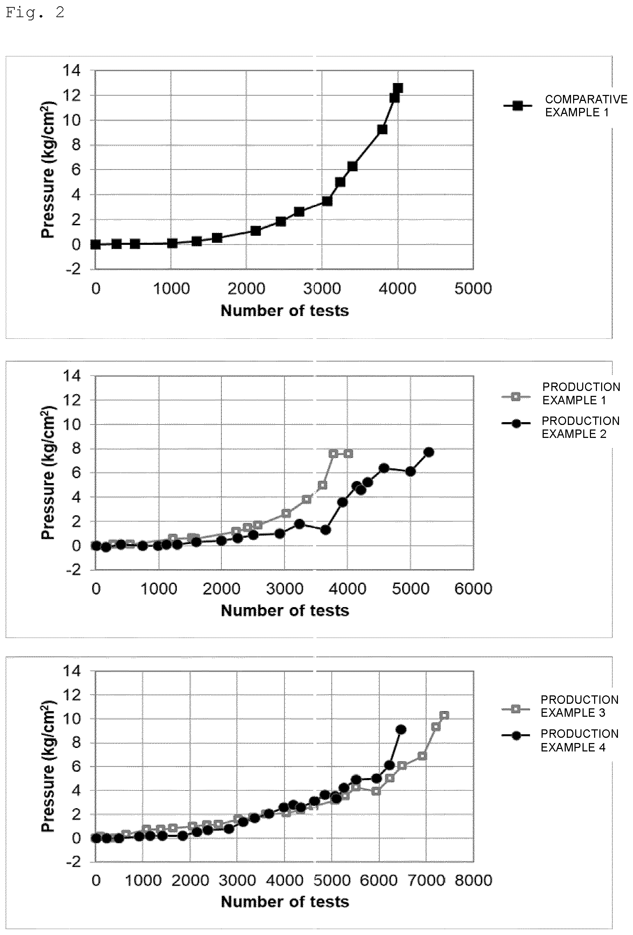

Fig. 2 shows the measurement results of the liquid flow pressure. In the liquid chromatography component of Comparative Example 1, the liquid flow pressure rapidly increased after around 3000 times of analysis. In the liquid chromatography components of Production Examples 1 to 2, the liquid flow pressure increased after around 3000 to 4000 times of analysis, but the liquid flow pressure was kept relatively low even after 4000 times of analysis. In Production Examples 3 to 4, the liquid flow pressure was kept relatively low even after 5000 times of measurements. Table 2 shows the pressure increase from the initial liquid flow after 4000 times of measurements in each liquid chromatography component.

[Table 2]

| | Comparative Example 1 | Production Example 1 | Production Example 2 | Production Example 3 | Production Example 4 |
|---|---|---|---|---|---|
| First space length (mm) between first filter and liquid flow inlet | 0.5 | 0.7 | 0.7 | 1.4 | 1.4 |
| space volume ($mm^3$) | 6.09 | 9.41 | 9.41 | 26.04 | 26.04 |
| Second space length (mm) between first and second filters | - | - | 0.0 | 0.8 | 0.3 |
| space volume ($mm^3$) | - | - | 0.00 | 19.00 | 7.12 |
| Pressure increase ($kg/cm^2$) from initial liquid flow after 4000 times of measurements | 12.6 | 7.6 | 3.6 | 2.1 | 2.6 |

Reference Signs List

1      Liquid chromatography component

2      Column end

3      Packing material

4      First filter

4'     Second filter

5      First spacer

5'     Second spacer

6      Distributer

7      Seal member

8      First space

9     Second space

10    Liquid flow inlet

11    Injection channel

**Claims**

**1.** A liquid chromatography component (1) comprising:

(a) an analytical column packed with a packing material (3);
(b) a liquid flow inlet (10); and
(c) a first filter (4) disposed upstream of the packing material (3) and also downstream of the liquid flow inlet (10), and
(d) a second filter (4') upstream of the packing material (3) and downstream of the first filter (4),
wherein a space between the first filter and the liquid flow inlet has a volume of 7 to 50 mm$^3$, and a distance from the first filter to the liquid flow inlet is 0.6 to 2.0 mm, and
wherein a space between the first filter and the second filter has a volume of 1 to 50 mm$^3$, and a distance from the first filter to the second filter is 0.1 to 1.5 mm.

**2.** The liquid chromatography component according to claim 1, further comprising a distributer between the first filter and the second filter, the distributer distributing liquid flow.

**3.** The liquid chromatography component according to any one of claims 1 or 2, further comprising a spacer between the first filter and the second filter.

**4.** The liquid chromatography component according to claim 1, further comprising a distributer upstream of the first filter, the distributer distributing liquid flow.

**5.** The liquid chromatography component according to any one of claims 1 to 4,

wherein the packing material comprises particles having an average particle size of 2 to 20 $\mu$m, and
the first filter has a filtration particle size of 1/6 to 1/3 of the average particle size of the particles of the packing material, a porosity of 60% to 90%, and an effective filtration area of 15 to 60 mm$^2$.

**6.** A method for reducing an increase in liquid flow pressure in a liquid

chromatography component (1), wherein
the liquid chromatography component (1) comprises an analytical column
packed with a packing material (3), a liquid flow inlet (10), and a first filter (4) disposed
upstream of the packing material (3) and also downstream of the liquid flow inlet (10), and
the method comprises disposing the first filter such that a space between the first filter and the liquid flow inlet has a
volume of 7 to 50 mm$^3$, and a distance from the first filter to the liquid flow inlet is 0.6 to 2.0 mm,
further comprising disposing a second filter (4') upstream of the packing material
and downstream of the first filter,
wherein a space between the first filter and the second filter has a volume of 1 to 50 mm$^3$, and a distance from the first filter to the second filter is 0.1 to 1.5 mm.

**7.** The method according to claim 6, further comprising disposing a distributer between the first filter and the second filter, the distributer distributing liquid flow.

**8.** The method according to any one of claims 6 or 7, wherein the first filter and the second filter are disposed with a spacer therebetween.

**9.** The method according to claim 6, further comprising disposing a distributer upstream of the first filter, the distributer distributing liquid flow.

**10.** The method according to any one of claims 6 to 9, wherein the packing material comprises particles having an average particle size of 2 to 20 μm, and
the first filter has a filtration particle size of 1/6 to 1/3 of the average particle size of the particles of the packing material, a porosity of 60% to 90%, and an effective filtration area of 15 to 60 mm$^2$.

11. A liquid chromatography analyzer comprising the liquid chromatography component according to any one of claims 1 to 5.

**Patentansprüche**

1. Eine Komponente für die Flüssigkeitschromatographie, umfassend:

   a) eine mit einem Packungsmaterial gefüllte analytische Säule;
   b) einen Flüssigkeitseinlass; und
   c) einen ersten Filter, der stromaufwärts des Packungsmaterials und stromabwärts des Flüssigkeitseinlasses angeordnet ist; und
   (d) einen zweiten Filter, der stromaufwärts des Packungsmaterials und stromabwärts des ersten Filters angeordnet ist;
   wobei der Raum zwischen dem ersten Filter und dem Flüssigkeitseinlass ein Volumen von 7 bis 50 mm$^3$ aufweist und der Abstand zwischen dem ersten Filter und dem Flüssigkeitseinlass 0,6 bis 2,0 mm beträgt; und
   wobei der Raum zwischen dem ersten und dem zweiten Filter ein Volumen von 1 bis 50 mm$^3$ aufweist und der Abstand zwischen dem ersten und dem zweiten Filter 0,1 bis 1,5 mm beträgt.

2. Die Komponente für die Flüssigkeitschromatographie nach Anspruch 1, ferner umfassend einen Verteiler zwischen dem ersten und dem zweiten Filter, der den Flüssigkeitsstrom verteilt.

3. Die Flüssigkeitschromatographiekomponente nach einem der Ansprüche 1 oder 2, ferner umfassend einen Abstandshalter zwischen dem ersten und dem zweiten Filter.

4. Die Flüssigkeitschromatographiekomponente nach Anspruch 1, ferner umfassend einen Verteiler stromaufwärts des ersten Filters, der den Flüssigkeitsstrom verteilt.

5. Die Flüssigkeitschromatographiekomponente nach einem der Ansprüche 1 bis 4, wobei das Packungsmaterial Partikel mit einer mittleren Partikelgröße von 2 bis 20 μm umfasst und
   der erste Filter eine Filtrationspartikelgröße von 1/6 bis 1/3 der mittleren Partikelgröße der Partikel des Packungsmaterials, eine Porosität von 60 % bis 90 % und eine effektive Filtrationsfläche von 15 bis 60 mm$^2$ aufweist.

6. Verfahren zur Reduzierung des Flüssigkeitsdruckanstiegs in einer Komponente der Flüssigkeitschromatographie, wobei die Komponente der Flüssigkeitschromatographie eine mit einem Packungsmaterial gefüllte analytische Säule, einen Flüssigkeitseinlass und einen ersten Filter umfasst, der stromaufwärts des Packungsmaterials und stromabwärts des Flüssigkeitseinlasses angeordnet ist, und

   das Verfahren umfasst, dass der erste Filter so angeordnet ist, dass der Raum zwischen dem ersten Filter und dem Flüssigkeitseinlass ein Volumen von 7 bis 50 mm$^3$ aufweist und der Abstand zwischen dem ersten Filter und dem Flüssigkeitseinlass 0,6 bis 2,0 mm beträgt,
   ferner umfassend, dass ein zweiter Filter stromaufwärts des Packungsmaterials und stromabwärts des ersten Filters angeordnet ist, wobei der Raum zwischen dem ersten Filter und dem zweiten Filter ein Volumen von 1 bis 50 mm$^3$ aufweist und der Abstand zwischen dem ersten Filter und dem zweiten Filter 0,1 bis 1,5 mm beträgt.

7. Verfahren nach Anspruch 6, ferner umfassend, dass ein Verteiler zwischen dem ersten Filter und dem zweiten Filter angeordnet ist, wobei der Verteiler den Flüssigkeitsstrom verteilt.

8. Verfahren nach einem der Ansprüche 6 oder 7, wobei der erste und der zweite Filter mit einem Abstandshalter dazwischen angeordnet sind.

9. Verfahren nach Anspruch 6, ferner umfassend die Anordnung eines Verteilers stromaufwärts des ersten Filters, der den Flüssigkeitsstrom verteilt.

**10.** Verfahren nach einem der Ansprüche 6 bis 9, wobei das Packungsmaterial Partikel mit einer mittleren Partikelgröße von 2 bis 20 $\mu$m umfasst und
der erste Filter eine Filtrationspartikelgröße von 1/6 bis 1/3 der mittleren Partikelgröße der Partikel des Packungsmaterials, eine Porosität von 60 % bis 90 % und eine effektive Filtrationsfläche von 15 bis 60 mm$^2$ aufweist.

**11.** Flüssigkeitschromatographie-Analysator mit der Flüssigkeitschromatographie-Komponente nach einem der Ansprüche 1 bis 5.

**Revendications**

**1.** Composant pour chromatographie liquide (1) comprenant :

(a) une colonne analytique remplie avec une matière de remplissage (3) ;
(b) une entrée d'écoulement de liquide (10) ; et
(c) un premier filtre (4) disposé en amont de la matière de remplissage (3) et également en aval de l'entrée d'écoulement de liquide (10), et
(d) un second filtre (4') en amont de la matière de remplissage (3) et en aval du premier filtre (4), dans lequel un espace entre le premier filtre et l'entrée d'écoulement de liquide présente un volume de 7 à 50 mm$^3$, et une distance entre le premier filtre et l'entrée d'écoulement de liquide est de 0,6 à 2,0 mm, et

dans lequel un espace entre le premier filtre et le second filtre présente un volume de 1 à 50 mm$^3$, et une distance entre le premier filtre et le second filtre est de 0,1 à 1,5 mm.

**2.** Composant pour chromatographie liquide selon la revendication 1, comprenant en outre un distributeur entre le premier filtre et le second filtre, le distributeur distribuant un écoulement de liquide.

**3.** Composant pour chromatographie liquide selon l'une des revendications 1 ou 2, comprenant en outre un espaceur entre le premier filtre et le second filtre.

**4.** Composant pour chromatographie liquide selon la revendication 1, comprenant en outre un distributeur en amont du premier filtre, le distributeur distribuant un écoulement de liquide.

**5.** Composant pour chromatographie liquide selon l'une des revendications 1 à 4, dans lequel la matière de remplissage comprend des particules ayant une taille moyenne de particule de 2 à 20 $\mu$m, et
le premier filtre présente une taille de particule de filtration ayant 1/6 à 1/3 de la taille moyenne de particule des particules de la matière de remplissage, une porosité de 60 % à 90 %, et une surface de filtration efficace de 15 à 60 mm$^2$.

**6.** Procédé de réduction d'une augmentation de la pression d'écoulement de liquide dans un composant pour chromatographie liquide (1), dans lequel le composant pour chromatographie liquide (1) comprend une colonne analytique remplie avec une matière de remplissage (3), une entrée d'écoulement de liquide (10), et un premier filtre (4) disposé en amont de la matière de remplissage (3) et également en aval de l'entrée d'écoulement de liquide (10), et
le procédé comprend de disposer le premier filtre de telle sorte qu'un espace entre le premier filtre et l'entrée d'écoulement de liquide présente un volume de 7 à 50 mm$^3$, et qu'une distance entre le premier filtre et l'entrée d'écoulement de liquide soit de 0,6 à 2,0 mm,

comprenant en outre de disposer un second filtre (4') en amont de la matière de remplissage et en aval du premier filtre,
dans lequel un espace entre le premier filtre et le second filtre présente un volume de 1 à 50 mm$^3$, et une distance entre le premier filtre et le second filtre est de 0,1 à 1,5 mm.

**7.** Procédé selon la revendication 6, comprenant en outre de disposer un distributeur entre le premier filtre et le second filtre, le distributeur distribuant un écoulement de liquide.

**8.** Procédé selon l'une des revendications 6 ou 7, dans lequel le premier filtre et le second filtre sont disposés avec un espaceur entre eux.

9. Procédé selon la revendication 6, comprenant en outre de disposer un distributeur en amont du premier filtre, le distributeur distribuant un écoulement de liquide.

10. Procédé selon l'une des revendications 6 à 9, dans lequel la matière de remplissage comprend des particules ayant une taille moyenne de particule de 2 à 20 $\mu$m, et
le premier filtre présente une taille de particule de filtration ayant 1/6 à 1/3 de la taille moyenne de particule des particules de la matière de remplissage, une porosité de 60 % à 90 %, et une surface de filtration efficace de 15 à 60 mm$^2$.

11. Analyseur pour chromatographie liquide comprenant le composant pour chromatographie liquide selon l'une des revendications 1 à 5.

Fig. 1

Fig. 2

**EP 4 130 733 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4475821 A
- JP H02262054 A
- WO 2009123199 A
- JP 2006189427 A